# EUROPEAN PATENT APPLICATION

(11) **EP 4 746 480 A1**
(43) Date of publication of application: **20.05.2026**
(21) Application number: 24841908.7
(22) Date of filing: 04.02.2024
(51) Int. Cl.: H04W 12/069

(54) **COMMUNICATION METHOD AND APPARATUS, AND COMPUTER-READABLE STORAGE MEDIUM**

(30) Priority: 19.07.2023 CN 202310894349
(71) Applicant: ZTE Corporation, Shenzhen, Guangdong 518057 (CN)
(72) Inventor: ZHANG, Kangjie, Shenzhen, Guangdong 518057 (CN); XIE, Feng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/075768
(87) International publication number: WO 2025/015901

(57) **Abstract**

Provided in the embodiments of the present disclosure are a communication method and apparatus, and a computer-readable storage medium. The method includes: receiving an authentication indication from a second node; the authentication indication being used to indicate the first node to perform network authentication; sending a first authentication request to the second node; the first authentication request being used to request verification of identity validity of the first node; receiving a second authentication request from the second node; the second authentication request being used to request verification of identity validity of the second node; and communicating with the second node after the second authentication request passes the verification.

## Description

The present disclosure claims priority of the Chinese patent application No. 202310894349.3, filed on July 19, 2023, all contents of which are incorporated into the present disclosure by reference.

### TECHNICAL FIELD

The present disclosure relates to the field of communication technologies, and in particular to a communication method, apparatus and a computer-readable storage medium.

### BACKGROUND

In communication technologies, authentication is required before a terminal accesses a network. Currently, authentication is performed by encrypting transmitted information, by a peer key stored by both the terminal and the network side, and both the communicating parties verify the encrypted information by the peer key, for authentication.

### SUMMARY

In an aspect, a communication method is provided, and applied to a first node. The communication method includes:
receiving an authentication indication from a second node; the authentication indication being used to indicate the first node to perform network authentication;
sending a first authentication request to the second node; the first authentication request being used to request verification of identity validity of the first node;
receiving a second authentication request from the second node; the second authentication request being used to request verification of identity validity of the second node; and
communicating with the second node after the second authentication request passes the verification.

In another aspect, a communication method is provided, and applied to a second node. The communication method includes:
sending an authentication indication; the authentication indication being used to indicate a first node to perform network authentication;
receiving a first authentication request of the first node; the first authentication request being used to request verification of identity validity of the first node; and
sending a second authentication request to the first node, after the first authentication request passes the verification; the second authentication request being used to request verification of identity validity of the second node.

In yet another aspect, a communication apparatus is provided. The communication apparatus includes: a receiving module, a sending module and a communication module.

The receiving module is configured to receive an authentication indication from a second node; the authentication indication being used to indicate the first node to perform network authentication.

The sending module is configured to send a first authentication request to the second node; the first authentication request being used to request verification of identity validity of the first node.

The receiving module is further configured to receive a second authentication request from the second node; the second authentication request being used to request verification of identity validity of the second node.

The communication module is configured to communicate with the second node after the second authentication request passes the verification.

In yet another aspect, a communication apparatus is provided. The communication apparatus includes: a sending module and a receiving module.

The sending module is configured to send an authentication indication; the authentication indication being used to indicate a first node to perform network authentication.

The receiving module is configured to receive a first authentication request of the first node; the first authentication request being used to request verification of identity validity of the first node.

The sending module is configured to send a second authentication request to the first node, after the first authentication request passes the verification; the second authentication request being used to request verification of identity validity of the second node.

In yet another aspect, a communication system is provided. The communication system includes a first node and a second node.

The second node sends an authentication indication, the authentication indication being used to indicate the first node to perform network authentication; the first node sends a first authentication request to the second node; the first authentication request being used to request verification of identity validity of the first node; after the first authentication request passes the verification, the second node sends a second authentication request to the first nod; the second authentication request being used to request verification of identity validity of the second node; after the second authentication request passes the verification, the first node communicates with the second node.

In yet another aspect, a communication apparatus is provided. The communication apparatus includes a memory and a processor; the memory is coupled with the processor; the memory is configured to store a computer program; and the processor, when executing the computer program, implements the communication method described in any of the above aspects or the embodiments.

In yet another aspect, a computer-readable storage medium is provided, on which computer program instructions are stored, and when the computer program instructions are executed by a processor, the communication method described in any of the above aspects or the embodiments is implemented.

In yet another aspect, a computer program product is provided, which includes computer program instructions, the computer program instructions, when executed by a processor, implement the communication method described in any of the above aspects or the embodiments.

### BRIEF DESCRIPTION OF THE DRAWINGS

To more clearly illustrate the technical solutions in the present disclosure, a brief introduction to the drawings required in some embodiments of the present disclosure will be provided below, and it is obvious that the drawings described below are only drawings of some embodiments of the present disclosure, and for those ordinary skilled in the art, other drawings may also be obtained according to these drawings.
FIG. 1 is a schematic diagram of a structure of a communication system according to some embodiments.
FIG. 2 is a schematic flowchart of a communication method according to some embodiments.
FIG. 3 is a schematic flowchart of another communication method according to some embodiments.
FIG. 4 is a schematic flowchart of yet another communication method according to some embodiments.
FIG. 5 is an interactive schematic diagram of a communication method according to some embodiments.
FIG. 6 is an interactive schematic diagram of another communication method according to some embodiments.
FIG. 7 is an interactive schematic diagram of yet another communication method according to some embodiments.
FIG. 8 is a structural schematic diagram of a communication apparatus according to some embodiments.
FIG. 9 is a structural schematic diagram of another communication apparatus according to some embodiments.
FIG. 10 is a structural schematic diagram of yet another communication apparatus according to some embodiments.

### DETAILED DESCRIPTION

The technical solutions of the present disclosure will be clearly and completely described below with reference to the drawings; obviously, the described embodiments are only a part, not all, of the embodiments of the present disclosure. All other embodiments obtained by those ordinary skilled in the art without making creative efforts based on the embodiments in the present disclosure fall within the scope of protection of the present disclosure.

It should be noted that in the present disclosure, words such as "exemplarily" or "for example" are used to indicate an example, illustration or explanation. Any embodiment or design solution described with "exemplarily" or "for example" in the present disclosure should not be construed as being more preferred or advantageous than other embodiments or design solutions. To be precise, the use of words such as "exemplarily" or "for example" is intended to present relevant concepts in a specific manner.

Below, terms such as "first" and "second" are used for descriptive purposes only and should not be understood as indicating or implying relative importance or implicitly indicating the number of the indicated technical features. Thus, features defined with "first", "second", etc., may expressly or implicitly include one or more of such features.

In the description of the present disclosure, unless otherwise stated, "/" means "or", and for example, A/B may represent A or B. Herein, "and/or" merely describes an association relationship of associated objects, indicating that there may be three relationships, for example, A and/or B may represent: only A, only B, and A and B. In addition, "at least one" refers to one or more, and "multiple/plurality of" refers to two or more.

When a user-side terminal initially accesses the network, authentication is required to acquire an access permission. The existing 5th-generation mobile communication system identity authentication and key agreement (5th-generation mobile communication technology authentication and agreement, 5G AKA) authentication includes traditional peer key verification, i.e., both the user-side terminal and the network side hold a peer key, to encrypt some determined and random information, and then user-side terminal and the network side verify whether the encrypted content from another party is encrypted by using the peer key, respectively, thereby proving identities of the two parties. For the network side, it is necessary for the network side to centrally store peer keys of all user terminals, for authentication when the terminals access.

The 5G AKA authentication procedure is briefly described as follows. When a terminal initiates registration with the network to start an authentication process, a unified data management (UDM) network element generates a 5G home environment authentication vector (5G HE AV), and provides the 5G HE AV to the authentication server function (AUSF) network element. The 5G HE AV includes XRES* (expected authentication response), AUTN (authentication token), RAND (challenge random number), and Kausf, the Kausf being derived from two keys (CK (cipher key) and IK (integrity key), derived from a root key) and SQN (sequence number), etc. The AUSF network element derives HXRES* and Kseaf from XRES* and Kausf, with the latter serving as a key for a next step. The AUSF network element delivers the 5G SE AV combining AUTN, RAND, and HXRES* to the security anchor entity (security anchor function, SEAF) network element, the SEAF network element sends AUTN and RAND to the terminal. The terminal authenticates the network by calculating an MAC by the common keys CK and IK as well as SQN, and comparing the MAC with MAC* included in the AUTH, and if the authentication passes, the terminal then calculates RES* corresponding to XRES* in the same manner and sends RES* to the SEAF network element. The SEAF network element processes RES* to derive HRES* and compares HRES* with HXRES*, to authenticate the terminal, and if the authentication passes, the SEAF network element sends RES* to the AUSF network element to compare the RES* with XRES* for a secondary authentication, and if the authentication passes, the authentication process ends.

From the above description of the 5G AKA authentication process, it can be seen that the authentication of all terminals needs to be performed by means of the root key stored in the UDM network element, due to the importance of the root key in network security, it can only be stored in the UDM network element. Since the UDM network element often needs to serve millions of users, when users frequently access, the load on the UDM network element will be extremely heavy, which easily leads to blockage of communication pipelines and a sharp increase in delay. According to the existing 5G AKA process, when the authentication process delay is too long, the entire process needs to be restarted, which will further increase the blockage of the UDM network element. In this centralized authentication method, there may be a risk that the UDM network element will fail so that the entire network will be paralyzed.

To sum up, there is an urgent need for a decentralized authentication method.

Based on this, the embodiments of the present disclosure provide a communication method, in which the first node, after receiving an authentication indication from the second node, may send an authentication request, to enable the second node to verify validity of the first node, and acquire an authentication request sent from the second node, to verify validity of the second node. It communicates with the second node after the verification passes. The communication method provided in the present disclosure adopts a two-direction authentication mode, thereby enabling authentication to be independent of the UDM network element, enabling any node in the network to implement authentication of terminals, avoiding the risk of the entire network being paralyzed due to a failure from a single point, and effectively improving the stability of the communication system.

The network architecture of the mobile communication system (including but not limited to 5G and future 6G mobile communication systems) in the embodiments of the present disclosure may include a first node and a second node. In some examples, the first node may be a terminal/user device (UE), and the second node may be a network-side device (for example, core network element, base station, etc.). In some other examples, the first node may be a network-side device and the second node may be a terminal. In some other examples, in a user-to-user communication scenario, both the first node and the second node may be terminals. The embodiments of the present disclosure are not limited thereto.

The following takes the first node as the terminal and the second node as the network-side device/terminal as an example for illustration.

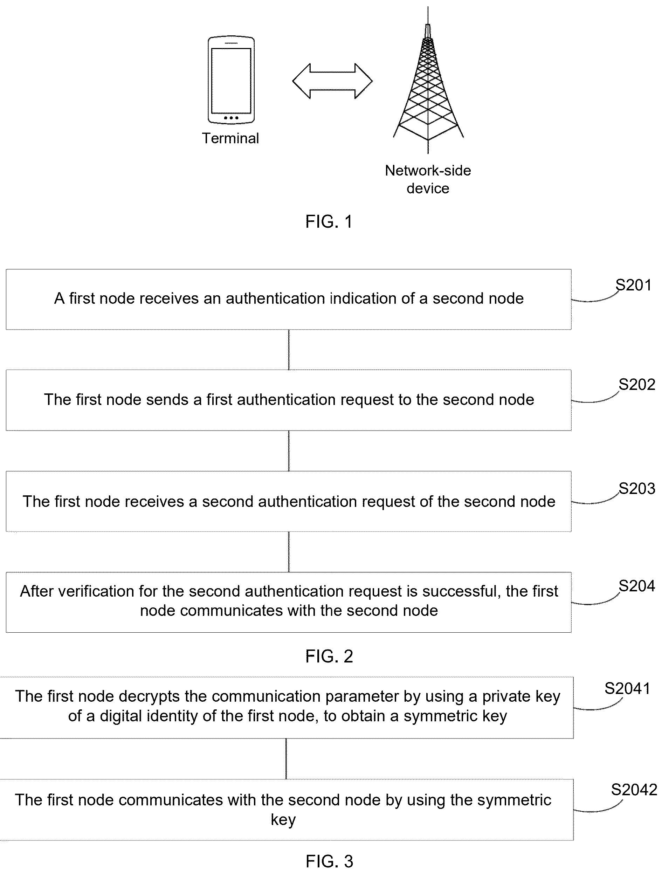

FIG. 1 is a structural schematic diagram of a communication system provided in the embodiments of the present disclosure. As shown in FIG. 1, the communication system includes a network-side device and a terminal. The network-side device and terminal may be connected via the wireless network. The wireless network may be supported by a router, a switch, or other devices that facilitate communication between the network-side device and terminal, which is not limited in the embodiments of the present disclosure.

In some embodiments, the network-side device may be a base station or a core network element, for example, the authentication server function (AUSF) network element. In a case where the network-side device is a core network element, the above-mentioned communication system also includes a base station for signal relay between the terminal and the core network element.

In some embodiments, the base station is configured to provide wireless access services for terminals. For example, a base station provides a service coverage area (which may also be referred to as a cell). Terminals entering the area may communicate with the base station via wireless signals to accept wireless access services provided by the base station. In addition, the service coverage area of the base station may be classified into near-field and far-field, and terminals may be within the near-field range or the far-field range.

In some embodiments, the base station may be a millimeter-wave base station, an evolution base station (evolution nodeB, eNB), a next generation base station (gNB), or a transmission receive point (TRP), a transmission point (TP), and some other access nodes. According to the size of the service coverage area provided, the base station may also be classified into a macro base station for providing a macro cell, a micro base station for providing a pico cell, and a femto base station for providing a femto cell. With the continuous evolution of wireless communication technologies, future base stations may also take on other names.

In some embodiments, the terminal may be a device with a wireless transceiver function, for example, a mobile phone, a tablet computer, a wearable device, a vehicle-mounted device, an augmented reality (AR)/virtual reality (VR) device, a laptop, an ultra-mobile personal computer (UMPC), a netbook, a personal digital assistant (PDA), etc. The embodiments of the present disclosure do not impose a limitation on the specific type of the terminal.

It should be understood that FIG. 1 is an exemplary structure diagram. The number of devices included in the communication system shown in FIG. 1 is not limited, for example, the number of network devices is not limited and the number of terminals is not limited. Furthermore, in addition to the devices shown in FIG. 1, the communication system shown in FIG. 1 may also include other devices, which is not limited thereto.

FIG. 2 is a schematic flowchart of a communication method provided in the embodiments of the present disclosure. Exemplarily, the communication method provided in the present disclosure may be applied to the communication system shown in FIG. 1, for example, to the first node, that is, the terminal in FIG. 1.

As shown in FIG. 2, the communication method provided in the present disclosure may include the following steps.

S201: A first node receives an authentication indication from a second node.

The authentication indication is used to indicate the first node to perform network authentication.

S202: The first node sends a first authentication request to the second node.

The first authentication request is used to request verification of identity validity of the first node.

For the above-mentioned S201 and S202, when the network access is required, the second node may broadcast the authentication indication to indicate the terminal to perform network authentication. After receiving the authentication indication, the first node may first send the first authentication request to the second node, to request the second node to verify its own identity validity.

In some embodiments, the certification indication includes first user verification information (ue-certification), the first user verification information is used to verify the identity validity of the first node. The first authentication request includes: a digital identity of the first node, second user verification information and first network verification information, and the second user verification information (ue-certification-encrypte) is encrypted first user verification information; the first network verification information is used to verify validity of the second node.

It can be understood that the above-mentioned digital identity is a digital code issued by a valid authority and is an identity proof of a device in the network. This digital identity may be a digital certificate or a decentralized digital identity (decentralized identify, DID). In a case where the digital identity is a digital certificate, the above-mentioned transmission of the digital identity is the transmission of the entire digital certificate. In a case where the digital identity is DID, the above-mentioned transmission of the digital identity may be only the transmission of the minimum information that may identify the user, such as a user number, etc.

In some embodiments, the above-mentioned digital identity may be transmitted in an encrypted manner, to prevent the user from being tracked. The embodiments of the present disclosure do not specifically limit the encrypted manner, and as an example, the encryption of the digital identity may be implemented by a method of encrypting a subscription permanent identifier (SUPI) as a subscription concealed identifier (SUCI).

In some embodiments, the above-mentioned first user verification information may be carried in system information block (SIB) signaling, for example, carried in an SIB1.

In some embodiments, the second user verification information is the first user verification information that has been encrypted by a private key (K-privte-ue) of the digital identity of the first node.

In some embodiments, the above-mentioned first user verification information and the above-mentioned first network verification information may be a string of numbers or a string of characters, etc. In addition, the verification information may change after a certain period of time, to prevent the verification information from being intercepted and acquired by other illegal users and then used in the authentication process.

S203: The first node receives a second authentication request from the second node.

The second authentication request is used to request verification of identity validity of the second node.

In some embodiments, the first authentication request includes first network verification information (network-certification), the first network verification information is used to verify validity of the second node. The second authentication request includes: a digital identity of the second node and second network verification information; and the second network verification information (network-certification-encrypted) is encrypted first network verification information.

In some embodiments, the second network verification information is the first network verification information that has been encrypted by a private key (K-privte-network) of the digital identity of the second node.

S204: The first node communicates with the second node after the second authentication request passes the verification.

For the above-mentioned S203 and S204, after the first node sends the first authentication request to the second node, it may receive the second authentication request from the second node and verify the identity validity of the second node based on the second authentication request. After the second authentication request passes the verification, the communication connection between the first node and the second node is established.

In some embodiments, before the above-mentioned S204, a verification process for the second authentication request is further performed, and the verification process may include the following steps.

Step a: The first node acquires a public key of a first authority to which the digital identity of the second node belongs. Step b: The first node decrypts the digital identity of the second node by using the public key of the first authority, to obtain a public key (K-publick-network) of the digital identity of the second node. Step c: The first node decrypts the second network verification information by using the public key of the digital identity of the second node, to obtain third network verification information (network-certification*). Step d: determine that the second authentication request passes the verification, in a case where the third network verification information is consistent with the first network verification information.

In some embodiments, the public key of the first authority may be stored in the storage space of the first node.

It can be understood that the above-mentioned verification method may not only verify whether the digital identity is valid (it may be considered to be valid, by decrypting the digital identity by using the public key of the first authority to successfully obtain the public key of the digital identity), but also verify whether the digital identity belongs to the second node (by comparing the first network verification information with the decrypted second network verification information), thereby improving the accuracy of verification.

In some embodiments, the second node may carry an encrypted symmetric key (a communication parameter) in the second authentication request, to inform the first node of the symmetric key to be used for subsequent communication. Therefore, as shown in FIG. 3, the above-mentioned S204 may also be implemented as S2041 to S2042.

S2041: The first node decrypts the communication parameter by using a private key of a digital identity of the first node, to obtain a symmetric key.

S2042: The first node communicates with the second node by using the symmetric key.

It should be understood that the encryption and decryption by using the symmetric key may effectively improve the encryption and decryption efficiency of data, and shorten the time of data processing. Therefore, the use of the symmetric key for communication after the authentication request passes the verification, may effectively improve the communication efficiency. In addition, encrypting by using the public key corresponding to the digital identity of the terminal, may ensure that only the private key corresponding to the digital identity of the terminal can be decrypted, so that the transmission security of the symmetric key may be guaranteed.

In some embodiments, if certain special circumstances cause the base station to malfunction and temporarily cease operations, the terminal (the first node) will be unable to access the network through the base station for communication. The communication method provided in the embodiments of the present disclosure may also support communication between a terminal and a terminal. That is, in a case where both the first node and the second node are terminals, before the above-mentioned S201, the first node also performs the following S200.

S200, the first node broadcasts a communication demand.

The communication demand is used to request communication with the second node.

For the above-mentioned S200, in a case where the first node has a communication demand, it may broadcast the communication demand to other surrounding terminals. If a certain terminal (i.e., the second node) responds to the communication demand, the first node performs the process of the above-mentioned S201 to S204, to establish a communication connection with the second node.

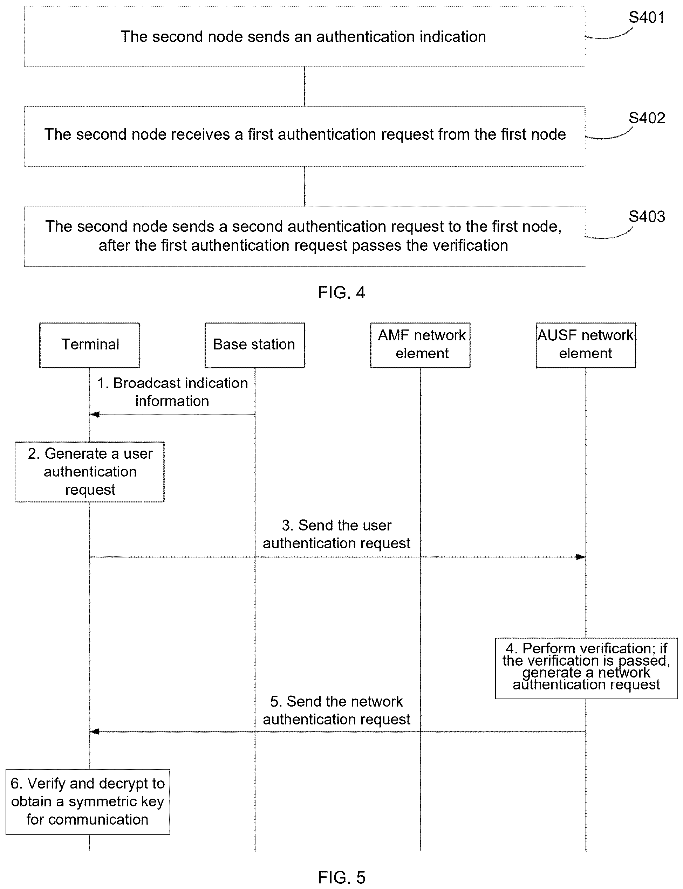

FIG. 4 is a schematic flowchart of a communication method provided in the embodiments of the present disclosure. Exemplarily, the communication method provided in the present disclosure may be applied to the communication system shown in FIG. 1, for example, to the second node, to the network-side device in FIG. 1.

As shown in FIG. 4, the communication method provided in the disclosure may include the following steps.

S401: The second node sends an authentication indication.

The authentication indication is used to indicate the first node to perform network authentication.

S402: The second node receives a first authentication request from the first node.

The first authentication request is used to request verification of identity validity of the first node.

S403: The second node sends a second authentication request to the first node, after the first authentication request passes the verification.

The second authentication request is used to request verification of identity validity of the second node.

For the above-mentioned S401 to S403, when network access is required, the second node may broadcast the authentication indication to indicate terminals within its own signal coverage range to perform network authentication. Then, the second node may receive the first authentication request sent from the first node, and verify the identity validity of the first node. After the first authentication request passes the verification, the second node determines validity of the first node and sends a second authentication request to the first node, to request the first node to verify its own identity validity, so as to implement the two-direction verification.

In some embodiments, the communication method provided in the embodiments of the present disclosure further includes the following verification steps. Step a, acquire a public key of a second authority to which the digital identity of the first node belongs. Step b, decrypt the digital identity of the first node by using the public key of the second authority, to obtain a public key of the digital identity of the first node. Step c, decrypt the second user verification information by using the public key of the digital identity of the first node, to obtain third user verification information. Step d, determine that the first authentication request passes the verification, in a case where the third user verification information is consistent with the first user verification information.

It should be understood that the above second authority and the above first authority may be the same authority or different authorities.

In some embodiments, when the second node is a network-side device (for example, a base station, an AUSF network element), the public key of the second authority mentioned above may be uploaded to the blockchain for storage, and the second node may acquire the public key of the second authority by accessing the blockchain. Alternatively, the public key of the second authority mentioned above may be stored in a preset storage space (for example, base station, edge node, UDM network element, AUSF network element, etc., of the network), and the second node may acquire the public key of the second authority from the preset storage space. In a case where the second node is a terminal, the public key of the second authority mentioned above may be stored in advance within the terminal, and directly acquired and used when needed.

When the second node is a base station, the digital identity of the second node should be stored in a specific authentication unit, like an SIM card that is physically isolated from other units, and the encryption of the first network verification information should also be completed in the specific authentication unit. The digital identity of the second node may be the digital identity of the network, or the digital identity of the base station itself.

In some embodiments, the second node may inform the first node of a symmetric key for communication, enabling the first node to communicate with the second node by using the symmetric key subsequently, thereby improving communication efficiency. Therefore, the above-mentioned second authentication request also includes a communication parameter, and the communication parameter is a symmetric key that has been encrypted by a public key of the digital identity of the first node.

As mentioned above, in a case where the base station malfunctions and fails to operate, the communication method provided in the embodiments of the present disclosure may also implement communication between terminals. That is, in a case where both the first node and the second node are terminals, before S401, the second node also performs the following S400.

In response to a communication request from the first node, the second node sends the authentication indication to the first node.

As mentioned above, in S200, the first node may broadcast a communication request to the surrounding, and if the second node receives the communication request and the second node currently has a communication demand as well, the second node may agree to the communication request, that is, in response to the communication request from the first node, send the authentication indication to the first node. Then, the second node continues to perform the above steps S401 to S403.

According to the communication method provided in the embodiments of the present disclosure, in this method, after receiving the authentication indication from the second node, the first node may send an authentication request to enable the second node to verify the validity of the first node, and acquire an authentication request sent from the second node to verify the validity of the second node. The first node communicates with the second node after the verification is passed. The communication method provided in the present disclosure adopts a two-direction authentication mode, thereby enabling authentication to be independent of the UDM network element, enabling any node in the network to implement authentication of terminals, avoiding the risk of the entire network being paralyzed due to a failure from a single point, and effectively improving the stability of the communication system.

In addition, the authentication by using the digital identity may not only determine whether the digital identity is valid, but also determine whether the device that sends the authentication request is matched with the digital identity, further ensuring communication security. In addition, the communication by the symmetric key after the authentication is passed, may improve the communication efficiency of the communication system, which is in line with the existing communication standards.

FIG. 5 is an interactive schematic diagram of a communication method provided in the embodiments of the present disclosure. Taking the network-side device as the AUSF network element as an example, as shown in FIG. 5, the communication system also includes a base station and an Access and Mobility Management Function (AMF) network element. Firstly, the base station broadcasts indication information, and after receiving the indication information, the terminal generates a user authentication request (the first authentication request mentioned above) and sends it to the AMF network element via the base station. Then, the AMF network element adds a network name to the user authentication request and forwards the user authentication request to the AUSF network element, and the AUSF network element verifies the user authentication request, and after the verification is passed, generates a symmetric key based on the network name carried in the user authentication request and encrypts the symmetric key, to generate a network authentication request carrying the encrypted symmetric key (the second authentication request mentioned above). Then, the AUSF network element sends the network authentication request to the terminal through the AMF network element and the base station successively, and the terminal, after verifying that the network authentication request is passed, decrypts to obtain the symmetric key, and communicates using the symmetric key.

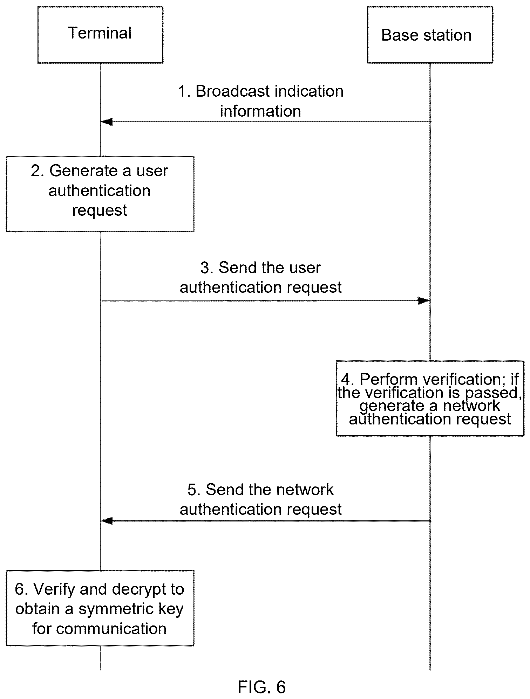

FIG. 6 is an interactive schematic diagram of a communication method provided in the embodiments of the present disclosure. Taking the network-side device as the base station as an example, as shown in FIG. 6, first, the base station broadcasts indication information, and after receiving the indication information, the terminal generates a user authentication request (the first authentication request mentioned above) and sends it to the base station. Then, the base station verifies the user authentication request, and after the verification is passed, generates a network authentication request carrying the encrypted symmetric key (the second authentication request mentioned above) and sends it to the terminal, and the terminal verifies and decrypts to obtain the symmetric key and communicates with the base station by using the symmetric key.

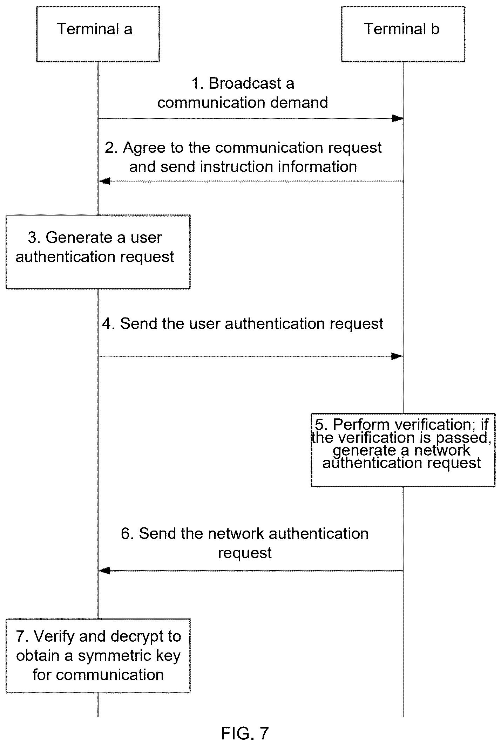

FIG. 7 is an interactive schematic diagram of a communication method provided in the embodiments of the present disclosure. Taking the network-side device as the terminal as an example, as shown in FIG. 7, the communication system includes a terminal a and a terminal b. First, the terminal a broadcasts a communication demand, and if the terminal b agrees to the communication demand, the terminal b sends indication information to the terminal a. After receiving the indication information, the terminal a generates a user authentication request (the first authentication request mentioned above) and sends it to the terminal b. Then, the terminal b verifies the user authentication request, and after the verification is passed, generates a network authentication request carrying the encrypted symmetric key (the second authentication request mentioned above) and sends it to the terminal a, and the terminal a verifies and decrypts to obtain the symmetric key and communicates with the terminal b by using the symmetric key.

It can be understood that the communication apparatus (which may be the first node or second node mentioned above) includes the corresponding hardware structures and/or software modules for performing each function, in order to implement the above functions. Those skilled in the art should easily realize that, in conjunction with the algorithmic steps of each example described in the embodiments of the present disclosure, the present disclosure can be implemented in the form of hardware or a combination of hardware and computer software. Whether a certain function is performed by hardware or computer software driving hardware, depends on the specific applications and design constraints of the technical solutions. Professional technicians may use different methods for each specific application to implement the described functions, but such an implementation should not be regarded as beyond the scope of the present disclosure.

In the embodiments of the present disclosure, the communication apparatus may be divided into function modules according to the above-mentioned method embodiments, and for example, each function module may be divided corresponding to each function, or two or more functions may be integrated into one function module. The above-mentioned integrated module may be implemented in the form of hardware or may be implemented in the form of software. It should be noted that the division of modules in the embodiments of the present disclosure is illustrative, and is merely a kind of logical function division, and there may be other division methods in actual implementations. The example in which each function module may be divided corresponding to each function is taken for explanation below.

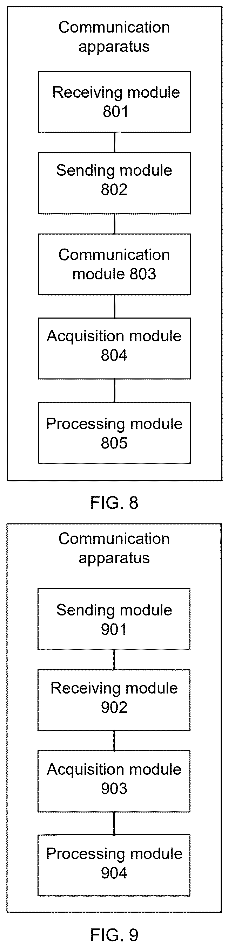

FIG. 8 is a structural schematic diagram of a communication apparatus provided in the embodiments of the present disclosure, the communication apparatus may perform the communication method provided in the above method embodiments. As shown in FIG. 8, the communication apparatus includes: a receiving module 801, a sending module 802 and a communication module 803.

The receiving module 801 is configured to receive an authentication indication from a second node; the authentication indication being used to indicate the first node to perform network authentication.

The sending module 802 is configured to send a first authentication request to the second node; the first authentication request being used to request verification of identity validity of the first node.

The receiving module 801 is further configured to receive a second authentication request from the second node; the second authentication request being used to request verification of identity validity of the second node.

The communication module 803 is configured to communicate with the second node after the second authentication request passes the verification.

In some embodiments, the authentication indication includes first user verification information, the first user verification information is used to verify the identity validity of the first node; the first authentication request includes: a digital identity of the first node, second user verification information and first network verification information; the second user verification information is encrypted first user verification information; and the first network verification information is used to verify validity of the second node.

In some embodiments, the second user verification information is the first user verification information that has been encrypted by a private key of the digital identity of the first node.

In some embodiments, the first authentication request includes first network verification information, the first network verification information is used to verify validity of the second node; the second authentication request includes: a digital identity of the second node and second network verification information; and the second network verification information is encrypted first network verification information.

In some embodiments, the second network verification information is the first network verification information that has been encrypted by a private key of the digital identity of the second node.

In some embodiments, the above-mentioned apparatus also includes: an acquisition module 804 and a processing module 805.

The acquisition module 804 is configured to acquire a public key of a first authority to which the digital identity of the second node belongs.

The processing module 805 is configured to decrypt the digital identity of the second node by using the public key of the first authority, to obtain a public key of the digital identity of the second node; decrypt the second network verification information by using the public key of the digital identity of the second node, to obtain third network verification information; and determine that the second authentication request passes the verification, in a case where the third network verification information is consistent with the first network verification information.

In some embodiments, the second authentication request further includes: a communication parameter; the communication module 803 may be configured to decrypt the communication parameter by using a private key of a digital identity of the first node, to obtain a symmetric key; and communicate with the second node by using the symmetric key.

In some embodiments, in a case where both the first node and the second node are terminals, the sending module 802 is further configured to broadcast a communication demand; the communication demand being used to request communication with the second node.

FIG. 9 is a structural schematic diagram of another communication apparatus provided in the embodiments of the present disclosure, the communication apparatus may perform the communication method provided in the above method embodiments. As shown in FIG. 9, the communication apparatus includes: a sending module 901 and a receiving module 902.

The sending module 901 is configured to send an authentication indication; the authentication indication being used to indicate a first node to perform network authentication.

The receiving module 902 is configured to receive a first authentication request of the first node; the first authentication request being used to request verification of identity validity of the first node.

The sending module 901 is further configured to send a second authentication request to the first node, after the first authentication request passes the verification; the second authentication request being used to request verification of identity validity of the second node.

In some embodiments, the authentication indication includes first user verification information, the first user verification information is used to verify the identity validity of the first node; the first authentication request includes: a digital identity of the first node, second user verification information and first network verification information; the second user verification information is encrypted first user verification information; and the first network verification information is used to verify validity of the second node.

In some embodiments, the second user verification information is the first user verification information that has been encrypted by a private key of the digital identity of the first node.

In some embodiments, the first authentication request includes first network verification information, the first network verification information is used to verify validity of the second node; the second authentication request includes: a digital identity of the second node and second network verification information; and the second network verification information is encrypted first network verification information.

In some embodiments, the second network verification information is the first network verification information that has been encrypted by a private key of the digital identity of the second node.

In some embodiments, the above-mentioned apparatus also includes an acquisition module 903 and a processing module 904.

The acquisition module 903 is configured to acquire a public key of a second authority to which the digital identity of the first node belongs.

The processing module 904 is configured to decrypt the digital identity of the first node by using the public key of the second authority, to obtain a public key of the digital identity of the first node; decrypt the second user verification information by using the public key of the digital identity of the first node, to obtain third user verification information; and determine that the first authentication request passes the verification, in a case where the third user verification information is consistent with the first user verification information.

In some embodiments, the second authentication request further includes a communication parameter; the communication parameter is a symmetric key that has been encrypted by a public key of a digital identity of the first node.

In some embodiments, in a case where both the first node and the second node are terminals, the sending module 901 may be configured to send the authentication indication to the first node, in response to a communication request from the first node.

The embodiments of the present disclosure provide a communication system, the communication system includes a first node and a second node, the first node is configured to perform the method described in S201 to S204 above, and the second node is configured to perform the method described in S401 to S403 above.

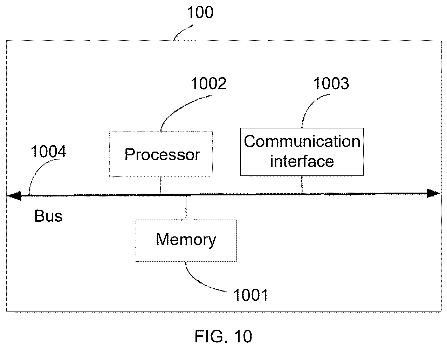

In a case of implementing the functions of the integrated modules mentioned above in the form of hardware, the embodiments of the present disclosure provide another possible structure of an electronic device or a communication apparatus involved in the above embodiments. As shown in FIG. 10 the communication apparatus 100 includes: a processor 1002 and a bus 1004. In some embodiments, the electronic device or communication apparatus may also include a memory 1001; in some embodiments, the electronic device or communication apparatus may also include a communication interface 1003.

The processor 1002 may implement or perform various exemplary logical blocks, modules and circuits described in conjunction with the embodiments of the present disclosure. The processor 1002 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 1002 may also be a combination that implements computing functions, for example, including a combination of one or more microprocessors, a combination of a digital signal processor (DSP) and a microprocessor, or the like.

The communication interface 1003 is configured to connect with other devices via a communication network. The communication network may be an Ethernet, a radio access network, a wireless local area network (WLAN), or the like.

The memory 1001 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 1001 may exist independently of the processor 1002, and the memory 1001 may be connected to the processor 1002 via the bus 1004 and used for storing instructions or program codes. The processor 1002, when calling and executing the instructions or program codes stored in the memory 1001, is capable of implementing the communication method provided in the embodiments of the present disclosure.

In another possible implementation, the memory 1001 may also be integrated with the processor 1002.

The bus 1004 may be an extended industry standard architecture (EISA) bus or the like. Buses 1004 may be divided into address buses, data buses, control buses, and the like. For the convenience of representation, only one thick line is used in FIG. 10 for representation, but it does not mean that there is only one bus or one type of bus.

In some embodiments, the memory 1001 stores executable instructions, and when the processor 1002 executes the executable instructions, the electronic device or communication apparatus performs the communication method as described in any embodiment of the above embodiments.

Some embodiments of the present disclosure provide a computer-readable storage medium (e.g., a non-transitory computer-readable storage medium), and the computer-readable storage medium has stored computer program instructions therein that, when running on a computer, cause the computer to perform the communication method as described in any embodiment of the above embodiments.

Exemplarily, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the communication method as described in any embodiment of the above embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

## Claims

1. A communication method, **characterized in that** the method is applied to a first node, and comprises:
receiving an authentication indication from a second node; the authentication indication being used to indicate the first node to perform network authentication;
sending a first authentication request to the second node; the first authentication request being used to request verification of identity validity of the first node;
receiving a second authentication request from the second node; the second authentication request being used to request verification of identity validity of the second node; and
communicating with the second node after the second authentication request passes the verification.

2. The method according to claim 1, wherein the authentication indication comprises first user verification information, the first user verification information is used to verify the identity validity of the first node; the first authentication request comprises: a digital identity of the first node, second user verification information and first network verification information; the second user verification information is encrypted first user verification information; and the first network verification information is used to verify validity of the second node.

3. The method according to claim 2, wherein the second user verification information is the first user verification information that has been encrypted by a private key of the digital identity of the first node.

4. The method according to claim 1, wherein the first authentication request comprises first network verification information, the first network verification information is used to verify validity of the second node; the second authentication request comprises: a digital identity of the second node and second network verification information; and the second network verification information is encrypted first network verification information.

5. The method according to claim 4, wherein the second network verification information is the first network verification information that has been encrypted by a private key of the digital identity of the second node.

6. The method according to claim 5, further comprising:
acquiring a public key of a first authority to which the digital identity of the second node belongs;
decrypting the digital identity of the second node by using the public key of the first authority, to obtain a public key of the digital identity of the second node;
decrypting the second network verification information by using the public key of the digital identity of the second node, to obtain third network verification information; and
determining that the second authentication request passes the verification, in a case where the third network verification information is consistent with the first network verification information.

7. The method according to any one of claims 1 to 6, wherein the second authentication request further comprises: a communication parameter;
communicating with the second node, comprises:
decrypting the communication parameter by using a private key of a digital identity of the first node, to obtain a symmetric key; and
communicating with the second node by using the symmetric key.

8. The method according to claim 1, wherein in a case where both the first node and the second node are terminals, the method further comprises:
broadcasting a communication demand; the communication demand being used to request communication with the second node.

9. A communication method, **characterized in that** the method is applied to a second node, and comprises:
sending an authentication indication; the authentication indication being used to indicate a first node to perform network authentication;
receiving a first authentication request of the first node; the first authentication request being used to request verification of identity validity of the first node; and
sending a second authentication request to the first node, after the first authentication request passes the verification; the second authentication request being used to request verification of identity validity of the second node.

10. The method according to claim 9, wherein the authentication indication comprises first user verification information, the first user verification information is used to verify the identity validity of the first node; the first authentication request comprises: a digital identity of the first node, second user verification information and first network verification information; the second user verification information is encrypted first user verification information; and the first network verification information is used to verify validity of the second node.

11. The method according to claim 10, wherein the second user verification information is the first user verification information that has been encrypted by a private key of the digital identity of the first node.

12. The method according to claim 9, wherein the first authentication request comprises first network verification information, the first network verification information is used to verify validity of the second node; the second authentication request comprises: a digital identity of the second node and second network verification information; and the second network verification information is encrypted first network verification information.

13. The method according to claim 12, wherein the second network verification information is the first network verification information that has been encrypted by a private key of the digital identity of the second node.

14. The method according to claim 11, wherein the method further comprises:
acquiring a public key of a second authority to which the digital identity of the first node belongs;
decrypting the digital identity of the first node by using the public key of the second authority, to obtain a public key of the digital identity of the first node;
decrypting the second user verification information by using the public key of the digital identity of the first node, to obtain third user verification information; and
determining that the first authentication request passes the verification, in a case where the third user verification information is consistent with the first user verification information.

15. The method according to any one of claims 9 to 14, wherein the second authentication request further comprises a communication parameter; the communication parameter is a symmetric key that has been encrypted by a public key of a digital identity of the first node.

16. The method according to claim 9, wherein in a case where both the first node and the second node are terminals, sending the authentication indication, comprises:
sending the authentication indication to the first node, in response to a communication request from the first node.

17. A communication apparatus, **characterized by** comprising: a processor, and a memory for storing instructions executable by the processor;
wherein the processor is configured to execute the instructions, to enable the communication apparatus to perform the communication method according to any one of claims 1 to 16.

18. A computer-readable storage medium, **characterized in that** computer instructions are stored on the computer-readable storage medium, and when the computer instructions are running on a communication apparatus, the communication apparatus performs the communication method according to any one of claims 1 to 16.
